# EUROPEAN PATENT APPLICATION

(11) **EP 3 249 479 A1**
(43) Date of publication of application: **29.11.2017**
(21) Application number: 17170913.2
(22) Date of filing: 12.05.2017
(51) Int. Cl.: G05B 19/042, B08B 15/00

(54) **FUME EXTRACTION SYSTEMS**

(30) Priority: 24.05.2016 GB 201609116
(71) Applicant: BOFA International Limited, Poole, Dorset BH17 7DX (GB)
(72) Inventor: LOCKWOOD, Antony Keith, Verwood, Dorset BH31 6PX (GB); DOVETON, Matthew John, Bournemouth, Dorset BH7 6PL (GB)
(74) Representative: Robinson, Simon John

(57) **Abstract**

A fume extraction apparatus (1) comprising an extraction pump, and the apparatus comprises a first interface (12) for connection to a process equipment, and a second interface (10) for connection to a system controller, wherein the apparatus comprises an intraconnection (15) to enable signals to be communicated between the first interface and the second interface.

## Description

### Technical Field

The present invention relates generally to fume extraction systems.

### Background

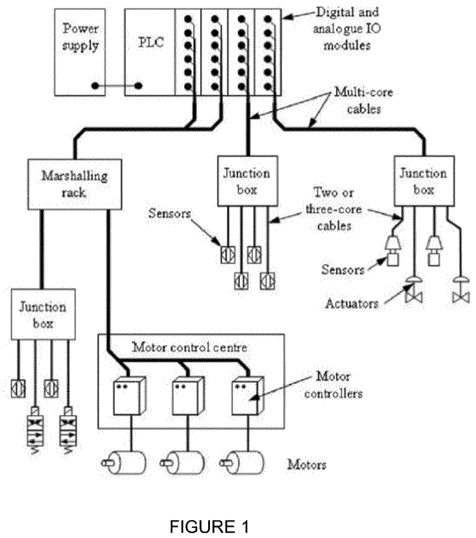

Traditionally in industrial automated systems, sensors and actuators are individually connected to the input/outputs of a programmable logic array (PLC). This typically involves long cable runs from a control room to the plant. Figure 1 illustrates an example of a traditional point-to-point wiring system configuration. If a new sensor or actuator were to be added to the system this would require the necessary input/output on the PLC and dedicated wiring installed, greatly reducing scalability. Each sensor or actuator requires a dedicated cable and PLC input/output for communication of a single variable. Communication of this variable is only one-way, either from system component to PLC or PLC to system component. Analogue signals can be subjected to noise, especially in a manufacturing environment, affecting the accuracy of the system.

Fume extractors are often part of sub-systems in which a device performs a task which creates fumes as part of the industrial process. A typical example being a laser coding system in which the laser coding process creates fumes which the fume extractor removes. These sub-systems themselves are often incorporated into larger systems controlled by a system controller. The system controller communicates to the sub-system controller (OEM device) which in turn controls the fume extractor as required.

Fume extraction systems comprise a series of filters such as multiple graded particle filters and a gas filter which are housed in a single unit, together with an extraction pump. The extraction pump draws contaminated air into the unit through the filters to remove the contaminants and output filtered air to the working area. When saturated, the filters, and in particular the gas filter must be replaced. In environments where high rates of gas and vapour are generated, the filters will need to be replaced more often.

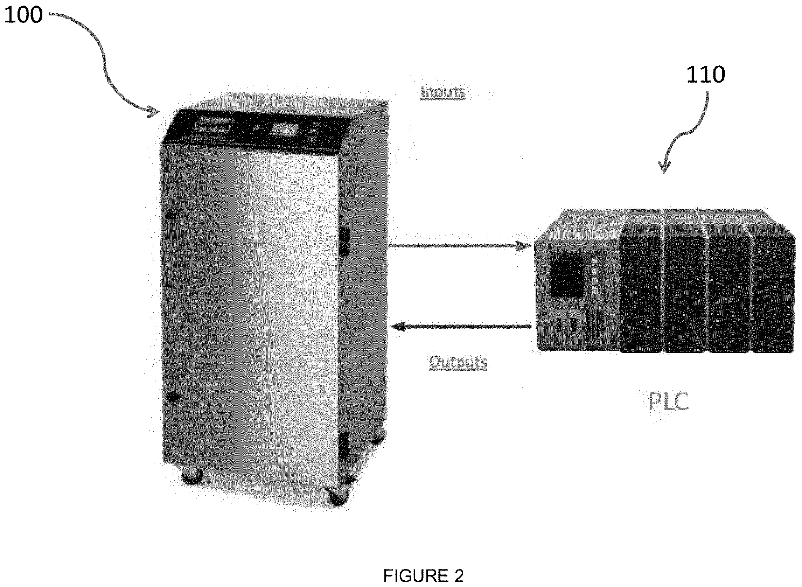

Reference is made to Figure 2 which shows a fume extraction unit 100 and a PLC 110. The digital I/O interface provided by the fume extraction unit allows rudimentary control and monitoring capabilities. In the example shown, the fume extractor can be stop-started and the state of the system and its filters can be monitored. This configuration would require a minimum of four PLC inputs/outputs and their associated wiring. Each additional fume extractor connected to the system would require additional input/outputs and wiring.

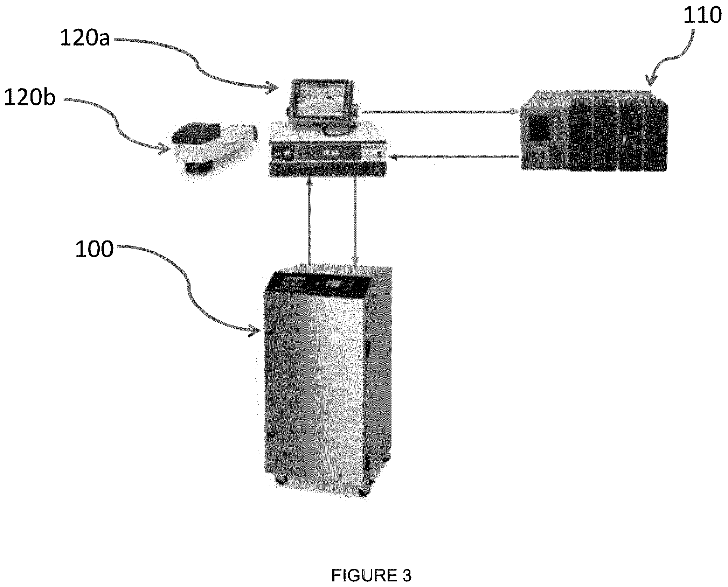

Reference is made to Figure 3 which shows a typical example of a laser coding sub-system (laser and fume extractor) 120a and 120b being controlled by a main system controller (PLC) 110. Currently, it is known to provide a simple digital interface to allow rudimentary monitoring and control of the extractor. In terms of inputs, these include stop and start, and in terms of outputs, these include system states, filter states and alarm states. Currently, it is known that for equipment attached to the fume extractor, such as a coding laser, there is provided a simple digital interface to allow rudimentary monitoring and control functionalities.

An example, of a coding laser interface includes inputs for start and stop functions, and outputs for system ready, ready to mark, marking and error.

We have devised an improved fume extraction apparatus in which interface and connectivity is provided for connected process equipment and a control module.

### Summary

According to a first aspect of the invention there is provided a fume extraction apparatus comprising an extraction pump, and the apparatus comprises a first interface for connection to a process equipment, and a second interface for connection to a system controller, wherein the apparatus comprises an intraconnection to enable signals to be communicated between the first interface and the second interface.

The signals may be representative of operational data and/or operational commands or requests.

The intraconnection may comprise an internal connection.

The intraconnection may comprise a switch.

Use of the intraconnection to convey signals between the first and second interfaces may be termed a bridging mode.

The intraconnection may comprise a switchable or fixed electrical connection between the interfaces.

The intraconnection may be arranged to route signals between the first interface and the second interface, and *vice versa.*

The intraconnection may comprise a gateway.

The intraconnection may comprise a fieldbus gateway.

The intraconnection may comprise a Controller Area Network (CAN) bus or fieldbus.

A gateway of the intraconnection may be arranged to implement a message-based communications protocol between the first interface and the second interface, and in particular between one or more devices connected to each of the first and second interfaces.

The intraconnection may comprise circuitry which is capable of communicating signals between the first interface and the second interface.

A gateway of the intraconnection may comprise a communications protocol converter. The gateway may be arranged to allow communication between different communication/technology protocols.

At least one of the first interface and the second interface may comprise an electrical interface. The electrical interface may comprise a socket or connector.

The intraconnection may be viewed as providing communication via the extraction unit between the first interface and the second interface.
An (internal) communications protocol between the first interface and the second interface, may be different to the communication protocol between the second interface and the system controller.

At least one of the first and second interfaces may be configured to receive a plug or connector.

The first and second interfaces may be physically distinct.

The first and second interfaces are preferably configured to connect to apparatus or devices which are external of the fume extraction apparatus. This may be in a detachably connectable manner.

The intraconnection is preferably internal of the fume extractor.

The process equipment may be equipment which, in use, generates fumes or hazardous vapour or particulate.

The first interface may be configured to be connected to a controller of a process equipment.

The first interface may be arranged/configured to allow communication of data stored in a memory of the fume extraction apparatus to the process controller, for example upon interrogation of the same by the process controller.

The first interface may comprise an input/output (I/O) module.

The process equipment may be or comprise an automated (industrial) process equipment. The process equipment may comprise laser marking equipment.

The second interface may comprise a fieldbus.

The second interface may be arranged to handle a fieldbus communications protocol.

The second interface may be arranged to communicate signals with the connected controller by way of fieldbus communication protocol, for example PROFIBUS (Process Field Bus).

The first interface may be configured to listen, in a listen mode, for a signal broadcast or output by the second interface, and *vice versa*, communicated over the intraconnection

The fume extraction apparatus of the invention may be viewed as having fieldbus connectivity. Fieldbus may be considered as a network system communication protocol which enables real-time distributed control of elements, components and devices of the network, for example between a controller and a system component. Fieldbus devices may share a common bus. Fieldbus-operative or -compatible devices may be capable of being added to a system without additional hardware requirements from the PLC or system controller.

The second interface may comprise a CAN/PROFIBUS gateway.

The intraconnection may comprise a CAN bus.

The types of data and signals which are capable of being communicated between the system controller and the process controller may include at least one of the following:
Control signals
Operational status
Diagnostic data
Operational commands
Alarm signals

The system controller may be arranged to be capable of communicating with the process equipment to issue a start/stop command signal. A start/stop signal is preferably a command signal indicative of an instruction to start or stop the operation of the process equipment, for example a RUN command.

The system controller may be viewed as a monitor for monitoring one or more operational parameters of the fume extraction apparatus. Operational parameters may include flow rate, pump speed, temperature and differential pressure.

The intraconnection may be configured such as to allow the system controller to access data stored in at least one of the process controller and a memory of the unit controller of the fume extraction apparatus. A connection may be provided between the first interface and the unit controller.

The intraconnection may be part of a master/slave system network. The system network may be an automation network. The system network may comprise a Controller Area Network (CAN).

The first interface may be a slave of a master/slave system network.
The second interface may be a slave of a master/slave system network.

The fume extraction apparatus may comprise a unit controller, which is preferably located/housed within the apparatus. The unit controller may be a master of a master/slave system network. The unit controller may be configured to determine a manner in which slaves communicate.

The intraconnection may be configured such that the first interface is capable of being accessible by the unit controller and/or the second interface, for example access to at least one of its inputs/outputs.

The unit controller may be arranged to communicate with one or more sensors for monitoring operational parameters of the fume extraction unit.

The unit controller may comprise a user input and a user output interface. The unit controller may be arranged to allow a user to effect control, effect operational settings/configurations and allow a user to interrogate the unit for operational data. The unit controller may comprise a data processor. The user output may comprise a visual display.

The first interface may be viewed as a process equipment input/output (digital) interface. The first interface may comprise (internal) ports which allow communication with the second interface.

The process equipment may comprise a sub-system which comprises a process controller and a controllable process device. Preferably the process controller is connected to the fume extraction apparatus.

The process controller may comprise a data processor which is arranged to monitor operational parameters of the fume extraction apparatus. The operational parameters may include flow rates of air through the apparatus and filter saturation levels.

The process controller may be viewed as implementing operational control of the fume extraction apparatus, in conjunction with at least the system controller.

According to a second aspect of the invention there is provided a fume extraction system which comprises the fume extraction apparatus of the first aspect of the invention, a process equipment, including a process controller, and the system comprising a system controller. The system controller may be an external unit or module. The system controller may be arranged to effect or dictate control of the process equipment. The process controller may be arranged to effect control of the fume extraction apparatus, for example based on a control signal originating from the system controller. The system controller may be connected to the fume extraction apparatus by way of an external connection, which may comprise electrical wiring or cabling. The system controller may comprise a separate physical entity to the fume extraction apparatus.

The fume extraction apparatus may comprise one or more features as described in the description and/or as shown in the drawings.

### Brief Description of the drawings

Various embodiments of the invention will now be described, by way of example only, with reference to the following drawings in which:
**Figure 4** is a schematic representation of a fume extraction system,
**Figure 5** is a further schematic representation of the fume extraction system of Figure 4,
**Figure 6** is a more detailed representation of the system shown in Figure 5,
**Figure 7** is a representation of an alternative embodiments, and
**Figure 8** is a schematic of multiple fume extraction units controlled by a single system controller, and connected in series.

### Detailed Description

There is now described a fume extraction apparatus 1 which is provided with improved interface, connectivity and control capabilities. In overview, the fume extraction apparatus 1 comprises an extraction pump, a housing, a user interface panel (which allows manual user interrogation, user settings configuration and display of system information and status), a fume inlet, an air outlet and filter modules removably located in the housing. The apparatus also comprises operational parameter monitoring sensors such as pressure sensors and/or flow sensors to enable monitoring of filter status and flow rates. The apparatus 1 is arranged to be connected to a process equipment, such as a laser coding system 120a and 120b, and a process controller 110. During operation of the process equipment fumes are produced which are drawn through the filters, and hazardous particulate is removed from the air, and the filtered air returned to the working area.

As will be described in more detail below, the fume extraction apparatus 1 comprises an interface for connecting to the process equipment and an interface for connection to the system controller. These interfaces 10 and 12 are advantageously bridged by a connection 15 comprising internal circuitry, allowing communication therebetween using communication signalling protocols, and in turn allowing enhanced and streamlined control and data exchange capabilities during operation of the fume extraction apparatus.

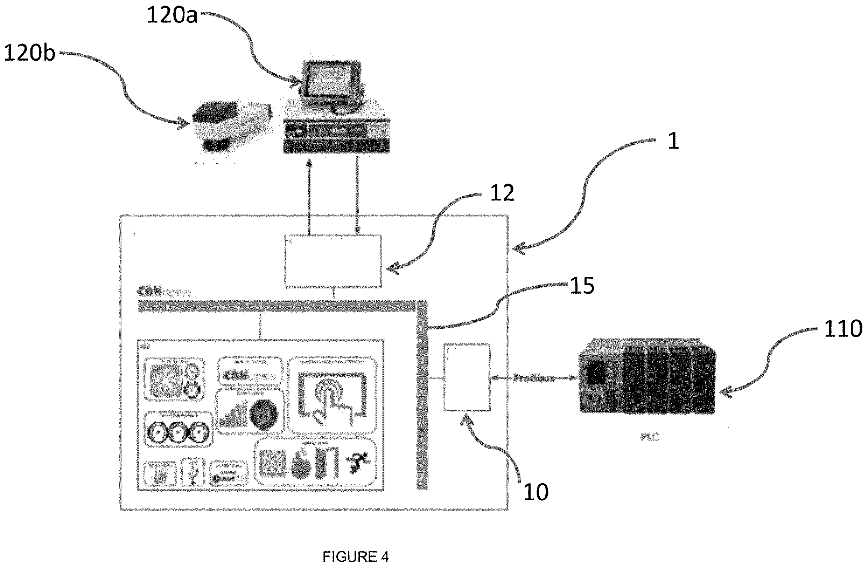

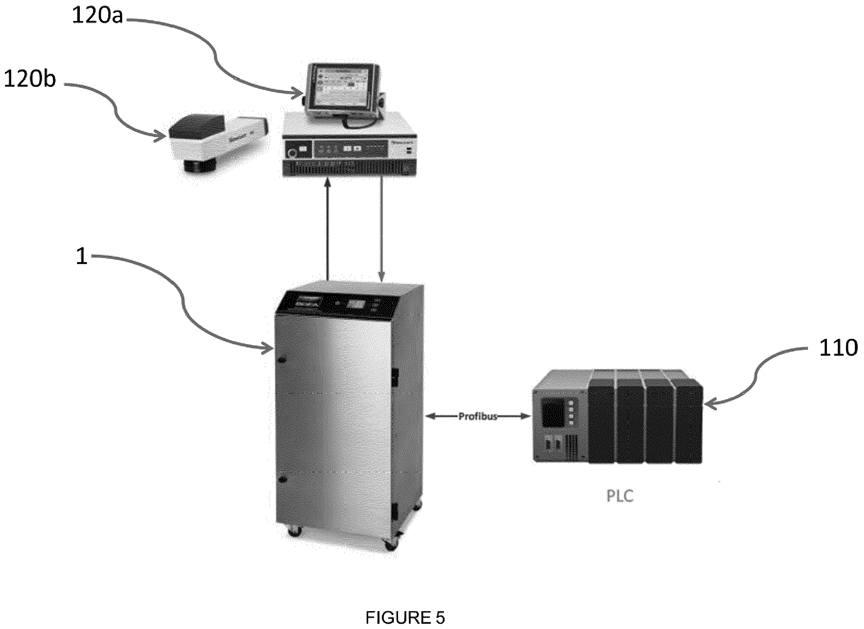

With reference to Figures 4 and 5, the fume extraction unit 1 comprises a first interface 12 and a second interface 10. The interface 10 comprises an electrical connector (such as an electrical socket) arranged to receive a counterpart connector, such as an electrical plug. The interface 12 also comprises an electrical connector, which enables connection with the process equipment controller 120a.

The system controller 110 is arranged to monitor operational parameters of the extraction unit 1, such as air flow rates through the unit 1, filter saturation status, alarm conditions and fault conditions. The controller includes a memory and data processing capability to update relevant operational status accordingly. The system controller is an external, separate unit to the fume extraction apparatus 1. The system controller 110 processes data received from the operational parameter sensor via a unit controller 14 which is contained internally of the apparatus 1.

In this arrangement, various data and signalling is transmitted via the connection 15, which is internal of the fume extraction unit 1. The connection 15 provides connectivity between the first interface 12 and the second interface 10. In particular, the gateway interface 10 is arranged to translate signals between CAN and PROFIBUS communications protocols. This includes communication of various control/command, status and data signals. In particular, the process controller 120a is capable is outputting SYSTEM READY, READY TO MARK, MARKING, ERROR operational status signals to the system controller 110.

In the opposite sense, the system controller 110 can send the following operational command signal to the process controller 120a, START/STOP. Therefore, should the controller 110 determine a status which is indicative of the unit 1 not being operated, the controller 110 outputs a signal via the interface 10, across the connection 15, through the interface 12, and to the process controller 120a. A data processor of the process controller, is then operative to output a control signal via the interface 12 to the unit 1 which causes the unit to start or stop operation (for example by way of a relay housed in the unit 1). Similarly, when the process controller 120a determines that the process equipment is ready to be operatively functional it will output a READY TO MARK signal. The signal passing via the interfaces 12 and 10 and the connection 15 reach the system controller 110. In response, assuming that inhibitive status of the unit 1 is determined, the system controller 110 can respond with a START command to the process controller 120a.

Additionally to signals received from the system controller 110, the process controller 120a is capable of receiving operational status signals directly from the fume extraction unit. This includes SYSTEM OK status and FILTER WARNING status.

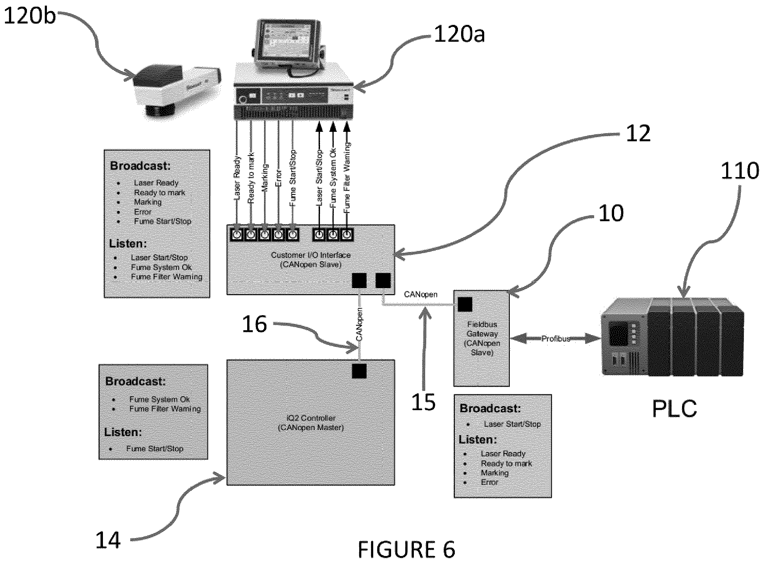

The interface 10 comprises a fieldbus interface, and the intraconnection is configured to communicate using the CANopen protocol to the interface 12, and *vice versa.* It will be appreciated that the process controller 120a is connected to the extraction apparatus 1 also by way of a fieldbus connection. It will also be appreciated that data and signalling between the interface 10, the interface 12 and the controller 14 are by way of the CANopen protocol.
Reference is made to Figure 6, which shows the system components and the connections in more detail. The (Customer I/O) Interface 12 in essence comprises a configurable digital I/O module with a CANopen slave interface. The fieldbus gateway of the interface 10 is used to allow the apparatus 1 to communicate with a fieldbus of a different type. The fieldbus gateway in this example is configured to have its CANopen interface acting as a slave. The controller unit 14 acts as a CANopen master (or system hub), and is connected to the interface 12 by way of intraconnection 16. The controller 14 configures how slaves communicate on the network.

In use, the interface 12 is configured to broadcast the state of its (digital) inputs whenever they change state. The state of the inputs can also be polled if required. The unit controller 14 is configured to listen to the broadcasted messages from the interface 12 that control the apparatus (i.e. Fume start/stop).

The fieldbus gateway of the interface 10 is configured to listen to the interface 12 broadcasted messages that are intended for the system controller 110 (PLC). The fieldbus gateway 10 relays these messages to the system controller 110.

The unit controller 14 is configured to broadcast its 'System OK' and 'Filter Warning' states whenever either of these status changes. This is an example as for other systems there may be greater or fewer signals to be sent via the interface 12.

The fieldbus gateway of the interface 10 is configured to broadcast any messages it receives from the system controller 110.

The interface 12 will be configured to listen for the messages intended to be output to the attached equipment (in this case a laser controller). On receipt of a message it will output the state accordingly via its digital output interface.

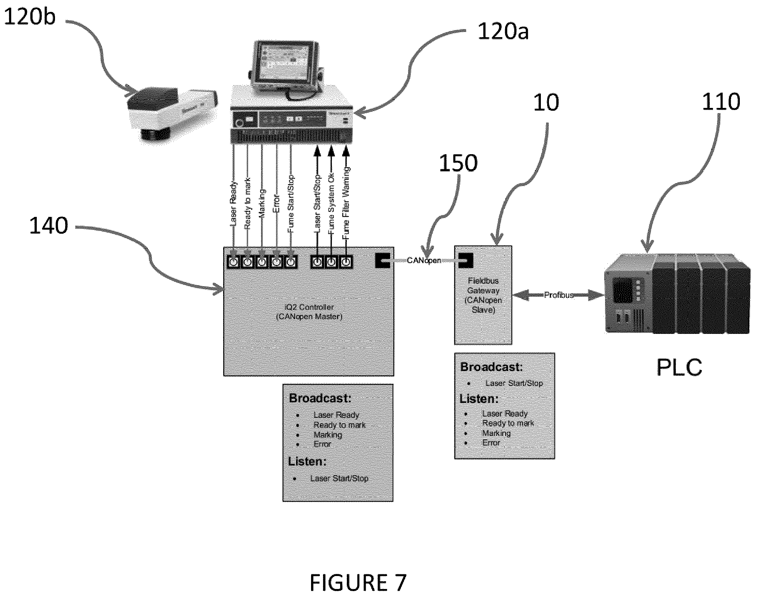

Figure 7 shows an alternative embodiment in which substantially the same functionality is realised without the interface 12 (which may also be termed a 'Customer I/O Interface') being a standalone board or module, namely that the (modified) unit controller 140 of the fume apparatus has embedded into it (at least from a functionality perspective) the interface 12, and comprising an internal connection 150 with the controller 140. The extraction unit 1 can physically connect to the laser's data communication lines. The unit 1 is operative to relay the required data to the (PLC) 110 via the fieldbus gateway of the interface 10.

Advantageously, additional fume extractors can easily be added to an existing system greatly improving scalability as compared to the known approaches.

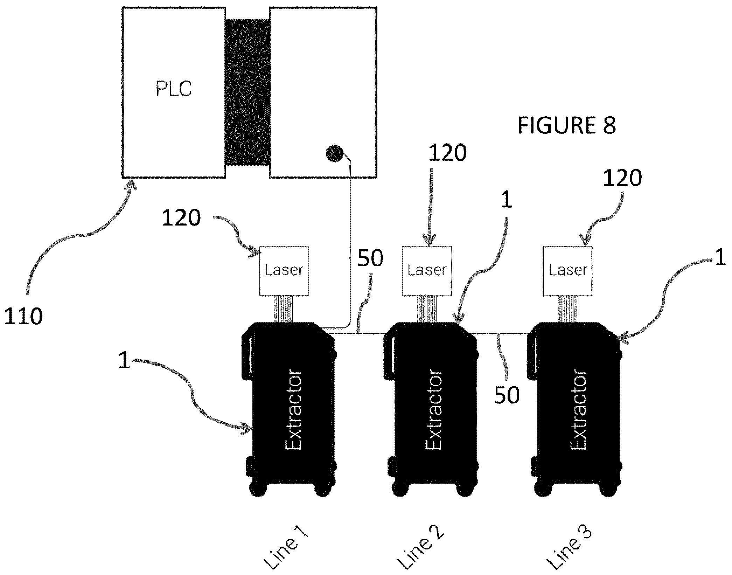

It will be appreciated that in this way, access to both the process controller 120a and the data stored in the extraction apparatus 1, is now advantageously readily available to the system controller 110. This provides a greatly simplified connection configuration as compared to prior art arrangements. Also, this allows the extraction apparatus 1 to be directly controlled by way a single external fieldbus interface, namely interface 10, by the system controller 110. Reference is made to Figure 8 which shows how a single system controller 110 can be used to control multiple connected fume extraction units, connected together in series by way of wires/cabling 50. Instead of requiring respective multiple wiring/cabling from the system controller 110 to each extraction unit, the system controller requires only connection to one unit.

The use of the fieldbus connection enables users to easily achieve a particular system configuration, be it simple or more complex. It will be appreciated that use of the interface 12 is not limited to laser coding equipment, and so the fume extraction apparatus can be used with a range of attached process equipment types.

The fieldbus connection has several benefits over a simple digital I/O interface of the prior art such as, complex data transfer, scalability, easy integration into existing systems and simpler wiring requirements. Multiple sub-systems can be connected to a larger system without requiring additional system controller I/O ports and the associated dedicated wiring.

The ability of the interface 12 to be (directly) controlled via the (external) fieldbus interface 10 allows equipment connected to the apparatus to inherit fieldbus capabilities through its digital interface. In laser applications, complete system control is achieved via a single fieldbus connection. This allows laser equipment to be simply and quickly integrated.

## Claims

1. A fume extraction apparatus comprising an extraction pump, and the apparatus comprises a first interface for connection to a process equipment, and a second interface for connection to a system controller, wherein the apparatus comprises an intraconnection to enable signals to be communicated between the first interface and the second interface.

2. A fume extraction apparatus as claimed in claim 1 in which the signals are representative of operational data and/or operational commands or requests.

3. A fume extraction apparatus as claimed in claim 1 or claim 2 in which the intraconnection is arranged to route signals between the first interface and the second interface, and *vice versa.*

4. A fume extraction apparatus as claimed in any preceding claim in which the bridge interface is arranged to implement a message-based communications protocol between the first interface and the second interface.

5. A fume extraction apparatus as claimed in any preceding claim in which the first interface is configured to allow communication of data stored in a memory of the fume extraction apparatus to the process controller, for example upon interrogation of the same by the process controller.

6. A fume extraction apparatus as claimed in any preceding claim in which at least one of the first and second interfaces are arranged to carry a fieldbus communications protocol.

7. A fume extraction apparatus as claimed in any preceding claim in which the second interface is arranged to communicate signals with the system controller by way of fieldbus communication protocol.

8. A fume extraction apparatus as claimed in any preceding claim I which the types of data and signals which are capable of being communicated between the first interface and the second interface include at least one of control signals, operational status, diagnostic data and operational commands.

9. A fume extraction apparatus as claimed in any preceding claim in which the first and second interfaces are such that the system controller is arranged to be capable of communicating with the process equipment to issue a start/stop command signal in relation to controlling the operational status of the fume extraction apparatus.

10. A fume extraction system which comprises the fume extraction apparatus of any of claims 1 to 9, a process equipment, including a process controller, and the system comprising a system controller.
